# EUROPÄISCHE PATENTSCHRIFT

(11) **EP 2 853 462 B1**
(45) Veröffentlichungstag und Bekanntmachung des Hinweises auf die Patenterteilung: **27.02.2019**
(21) Anmeldenummer: 13004677.4
(22) Anmeldetag: 26.09.2013
(51) Int. Cl.: B61D 17/22, B60D 5/00, B64F 1/31

(54) **Balg einer Übergangseinrichtung zwischen zwei gelenkig miteinander verbundener Fahrzeuge oder Fahrzeugteile oder Balg eines Vordachs einer Fluggastbrücke oder Fluggasttreppe**
Bellows for a transition between two articulated vehicles or vehicle parts or bellows of a canopy of an air passenger boarding bridge or steps
Soufflet d'un dispositif de transition entre deux véhicules ou parties de véhicules reliés entre eux de façon articulés ou soufflet d'un avant-toit d'une passerelle ou d'un escalier d'embarquement

(43) Veröffentlichungstag der Anmeldung: 01.04.2015
(73) Patentinhaber: Hübner GmbH & Co. KG, 34123 Kassel (DE)
(72) Erfinder: Jünke, Volker, 34123 Kassel (DE); Goebels, André, 34134 Kassel (DE); Harz, Sebastian, 34320 Söhrewald (DE)
(74) Vertreter: Patentanwälte Walther Hinz Bayer PartGmbB

(56) Entgegenhaltungen:
- EP-A1- 2 418 107
- EP-A1- 2 468 600
- DE-U1- 29 921 498
- FR-A- 345 808

## Beschreibung

Die Erfindung betrifft einen Balg einer Übergangseinrichtung zwischen zwei gelenkig miteinander verbundener Fahrzeuge oder Fahrzeugteile, umfassend mindestens einen einen Übergang überspannenden Balg, oder den Balg eines Vordachs einer Fluggastbrücke oder Fluggasttreppe, wobei der Balg eine Mehrzahl von Balgrahmen aufweist, gemäß den Oberbegriffen der unabhängigen Ansprüche 1, 5 und 7 Übergangseinrichtungen sind aus dem Stand der Technik bei Gelenkfahrzeugen hinreichend bekannt. Die Übergangseinrichtung bei einem Bus umfasst üblicherweise die Plattform und den die Plattform umspannenden Balg. Bei einem Schienenfahrzeug kann ebenfalls als Übergang eine Plattform vorgesehen sein oder eine Brücke, z. B. eine Gliederbrücke, oder auch einzelne Brückenbleche, wobei die Übergangseinrichtung auch hier von dem Balg umspannt wird. In Bezug auf die Ausgestaltung des Balges sind zwei unterschiedliche Arten bekannt, nämlich zum einen Wellen- und zum anderen Faltenbälge. Beiden Balgarten ist jedoch gemein, dass diese mehrere hintereinander angeordnete Balgrahmen aufweisen. Bei einem Wellenbalg werden beispielsweise die Wellen im Wellengrund erfasst. Auch bei einem Faltenbalg sind eine Mehrzahl von Balgrahmen vorgesehen, wobei die Balgrahmen den Faltenbalgstoff im Übergang von einer Falte zur nächsten Falte zumindest auf der Außenseite des Balges erfassen.

Der Balg eines Vordachs einer Fluggasttreppe oder Fluggastbrücke stellt die Verbindung zwischen Fluggastbrücke oder-treppe und der Eingangsöffnung zum Flugzeug dar. Die Bälge für Fluggastbrücken oder - treppen sind ähnlich den Bälgen für Übergangseinrichtungen ausgebildet.

Der Balg unterliegt einem natürlichen Verschleiß. Besonders gravierend ist der Verschleiß im Bereich des Balgdaches. Dies insbesondere deshalb, weil dieser Teil des Balges zum einen einer intensiven Sonneneinstrahlung ausgesetzt ist, zum anderen allerdings auch, weil sich Verschmutzungen im Bereich der Wellen oder Falten ansammeln, die nicht immer vom Regen weggewaschen werden. Die Folge hiervon ist, dass der Balgstoff, der aus mindestens einem mit einem Elastomer beschichteten Festigkeitsträger ausgebildet ist, an manchen Stellen schneller verschleißt als an anderen Stellen. Die Balgrahmen selbst, die der Stabilität des Balges dienen, sind meistens noch vollkommen intakt. Bisher ist es nun so, dass wenn der Balg an einer Stelle einen bestimmten Verschleißzustand aufweist, was meistens im Dachbereich der Fall ist, der Balg insgesamt ausgetauscht wird. Dies ist insbesondere dann mit einem erheblichen finanziellen Aufwand verbunden, wenn sogenannte Doppelwellenbälge bei Übergangseinrichtungen zum Einsatz kommen. In diesem Zusammenhang ist festzuhalten, dass bei einem Doppelwellenbalg der innere Balg im Wesentlichen überhaupt keinem Verschleiß unterliegt, da er während des Betriebes keinen Umgebungseinflüssen ausgesetzt ist. Ein Doppelwellenbalg ist aus der EP 2 468 600 A1 bekannt, wobei hierbei der äußere Balg unter Bildung eines Kanals mit dem inneren Balg durch Stege verbunden ist.

Aus der DE 299 21 498 U1 ist die Anbindung einer Spurfugenabdeckung an der Innenseite der Seitenwand eines Balges bekannt. Hierbei weist die Spurfugenabdeckung mehrere Falten auf, wobei der Scheitel der Falte mit einem im Querschnitt U-förmigen Rahmen versehen ist. Diese Rahmen sitzen auf den Balgrahmen der Seitenwand auf und sind mit den Balgrahmen kraftschlüssig verbunden.

Aus der FR 345 808 A ist bekannt bei einem Faltenbalg Einsätze im Dachbereich vorzusehen. Diese Einsätze reichen von der Mittellinie des Scheitels zwischen zwei Falten bis zu dem Faltengrund im Seitenbereich des Faltenbalgdaches. Solche Einsätze erstrecken sich zu beiden Seiten der Mittellinie des Balges. Sie sind dreieckförmig ausgebildet und decken lediglich einen Teilbereich des Dachs eines Balges ab.

Die der Erfindung zugrunde liegende Aufgabe besteht darin, bei einem Balg, der im Dachbereich verschlissen ist, unter Vermeidung des Austausches des kompletten Balges, den Dachbereich wieder so weit instand zu setzen, dass das Fahrzeug mit einem solchen Balg noch gut fünf bis zehn Jahre in Betrieb bleiben kann, ohne dass die Gefahr von Undichtigkeiten im Balg besteht.

Die Lösung der Aufgabe erfolgt nach einer ersten Ausführungsform durch die Merkmale des kennzeichnenden Teils des Anspruchs 1 in Verbindung mit den Merkmalen des Oberbegriffs Die Abdeckung ist als Haube mit einem Balgstoff ausgebildet ist, wobei sich die Haube bis in den Bereich der Seitenwände des Balges und sich vom Wagenkasten des einen Fahrzeugs oder Fahrzeugteils bis zum Wagenkasten des anderen Fahrzeugs oder Fahrzeugteil erstreckt.

Die Haube umfasst eine Mehrzahl von etwa U-förmig verlaufenden Halterahmen, wobei die Halterahmen eine Bahn aus Balgstoff aufnehmen, dass der Halterahmen unter Bildung einer Kavität im Querschnitt in etwa U-förmig ausgebildet ist, wobei durch die Kavität der Balgrahmen des Balges aufnehmbar ist.. Hieraus wird deutlich, dass die Kosten für eine Abdeckung des Dachbereiches eines vorhandenen Balges, um diesen wieder in einen weiterhin gebrauchsfähigen Zustand zu versetzen, wesentlich geringer sind, als der Ersatz eines vollständigen Balges.

Wie ausgeführt ist die Abdeckung als Haube ausgebildet. Das heißt, dass eine solche Haube als im Herstellerwerk vorkonfektionierte Einheit lediglich auf das Balgdach aufgebracht werden muss, um den Balg wieder in den bereits zuvor genannten gebrauchsfähigen Zustand zu versetzen. In diesem Zusammenhang weist die Haube eine Mehrzahl von in der Ansicht etwa U-förmig verlaufenden Halterahmen auf, wobei die Halterahmen eine Bahn aus Balgstoff aufnehmen. Der Balgstoff ist identisch oder zumindest ähnlich zu dem des Balges; er besteht aus mindestens einem Festigkeitsträger, beispielsweise einem Gewebe oder Gestrick, das zu beiden Seiten von einem Elastomer umgeben ist, um einem solchen Stoff die erforderliche Dichtigkeit, insbesondere gegenüber Feuchtigkeitseinwirkung, zu vermitteln. Die Balgrahmen und damit die Haube erstrecken sich über das Balgdach, die Balgecken bis in den Bereich der Seitenwand. Die Bahn aus Balgstoff ist in ihren Abmessungen so gewählt, dass sie in etwa parallel zu den Wellen oder Falten des Balgdachs verläuft, und sich von dem Wagenkasten des einen Fahrzeugs oder Fahrzeugteils bis zum Wagenkasten des anderen Fahrzeugs oder Fahrzeugteils erstreckt.

Der Halterahmen selbst ist unter Bildung einer Kavität im Querschnitt in etwa U-förmig ausgebildet, wobei durch die Kavität der Balgrahmen des Balges aufnehmbar ist. Das heißt, dass die Kavität in etwa der Form und Größe des Balgrahmens des Balges nachempfunden ist, wobei die Größe im Einzelnen derart gewählt ist, dass der Halterahmen über den Balgrahmen übergestülpt werden kann und nachträglich am Balgrahmen fixiert werden kann.

Um nun sicherzustellen, dass während des Transports und auch während der Montage die Bahn aus Balgstoff auf der Innenseite der Kavität des Halterahmens verbleibt ist vorgesehen, dass die Bahn aus Balgstoff auf der Innenseite der Kavität fixierbar ist, beispielsweise durch Kleben, Nieten oder Schrauben. Eine solche vorkonfektionierte Haube zum Aufsatz auf dem Dach eines Balges kann im einfachsten Fall den Betreibern zur Selbstmontage überlassen werden. Erforderlich ist lediglich eine Gripzange, mit welcher die einzelnen Halterahmen nach dem Überstülpen auf die Balgrahmen verformt werden.

Eine zweite erfindungsgemäße Ausführungsform einer Haube zeichnet sich durch die Merkmale des kennzeichnenden Teils des Anspruchs 7 in Verbindung mit den Merkmalen des Oberbegriffs aus Die Abdeckung umfasst mehrere Streifen aus einem Balgstoff umfasst, wobei die Streifen zu beiden Längsseiten jeweils durch einen Halterahmen aufgenommen sind, wobei der Halterahmen unter Bildung einer Kavität zur Aufnahme durch den Balgrahmen im Querschnitt in etwa U-förmig ausgebildet ist. Zur Fixierung der einzelnen Streifen aus dem Balgstoff besitzt der im Querschnitt U-förmige Halterahmen im Bereich seiner Schenkel Klemmmittel. Die Klemmmittel stellen sich insbesondere als eine in den Schenkeln in Richtung auf den Balg auslaufende Nut dar, die insbesondere gezahnt ist und in die die Streifen aus Balgstoff eingelegt und durch Quetschen an dem Halterahmen fixiert werden. Durch die Verzahnung in der Nut wird erreicht, dass der Balgstoff nicht unbeabsichtigt aus der Nut gelangen kann.

Eine dritte Ausführungsform für eine Lösung der Aufgabe ergibt sich aus dem kennzeichnenden Teil des Anspruchs 5 in Verbindung mit seinem Oberbegriff. Die Streifen aus einem Balgstoff sind zu beiden Längsseiten an dem Balgrahmen des Balges anliegend durch mindestens eine Spangefixiert, wobei auf den Balgrahmen ein im Querschnitt in etwa U-förmiger Halterahmen über die mindestens eine Spange aufgesetzt wird. Der Halterahmen weist durch die U-förmige Ausbildung eine Kavität zur Aufnahme durch den Balgrahmen auf. Das heißt, dass die Abdeckung zu jeder Seite des Balgrahmens verlaufend hin Streifen aus einem Balgstoff aufweist, wobei zur Montage des Halterahmens auf dem Balgrahmen die Enden der Stoffstreifen durch mindestens eine, vorzugsweise allerdings mehrere Spangen, in einer vorbestimmten Position gehalten werden, und zwar so lange, bis der Halterahmen über den Balgrahmen gestülpt und mit dem Halterahmen verbunden ist. Das heißt, dass die Spange, die insbesondere federnd ausgebildet ist, ein "verlorenes" Fixiermittel darstellt. Die Streifen aus Balgstoff verlaufen hierbei in etwa parallel zu den Wellen oder Falten des Balges im Dachbereich.

Es wurde bereits darauf hingewiesen, dass der Halterahmen durch die Kavität mit dem Balgrahmen verbindbar ist. Im Einzelnen ist in diesem Zusammenhang vorgesehen, dass der Halterahmen auf den Balgrahmen aufclipsbar ist, wobei der Halterahmen nach dem Aufclipsen durch eine entsprechende Gripzange an den Balgrahmen angepresst wird. Denkbar ist in diesem Zusammenhang ebenfalls, den Halterahmen bei entsprechend großer Abmessung der Kavität über den Balgrahmen zu stülpen, um diesen dann mittels der zuvor bereits erwähnten Zange an den Balgrahmen zu pressen.

Anhand der Zeichnungen wird die Erfindung nachstehend beispielhaft am Balg einer Übergangseinrichtung näher erläutert. Die Ausführungen gelten jedoch sinngemäß auch für die Bälge von Vordächern von Fluggastbrücken oder -treppen.
- Fig. 1: zeigt schematisch zwei Fahrzeugteile, die im Bereich der gelenkigen Verbindung eine Übergangseinrichtung aufweisen;
- Fig. 2: zeigt eine erste Ausführungsform eines Schnittes gemäß der Linie II-II aus Fig. 1;
- Fig. 3: zeigt eine zweite Ausführungsform eines Schnittes gemäß der Linie III-III aus Fig. 1;
- Fig. 4: zeigt eine dritte Ausführungsform eines Schnittes gemäß der Linie IV-IV aus Fig. 1,
- Fig. 5: zeigt einen Schnitt gemäß der Linie V-V aus Fig. 1.

Für die nachstehende Beschreibung wird darauf hingewiesen, dass in den Figuren gleiche Teile mit gleichen Bezugszeichen versehen sind.

Die beiden gelenkig miteinander verbundenen Fahrzeugteile sind mit 1 und 2 bezeichnet. Zwischen den beiden Fahrzeugteilen 1 und 2 befindet sich die mit 4 bezeichnete Übergangseinrichtung mit einem Balg 10. Der Übergang, beispielsweise eine Brücke oder eine Plattform, ist der Übersichtlichkeit wegen nicht dargestellt.

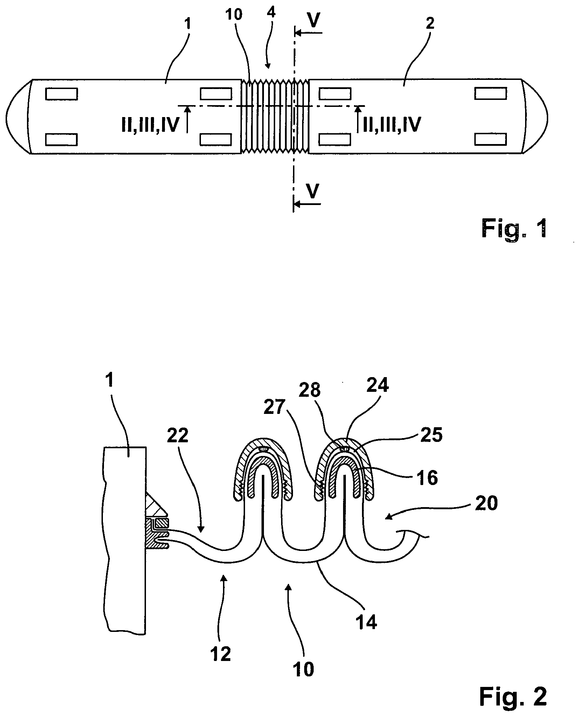

Die Figuren 2, 3 und 4 zeigen jeweils Ausschnitte aus den Schnitten gemäß den Linien II/II, III/III und IV/IV aus Fig. 1.

Aus Fig. 2 ergibt sich nun der Dachbereich 12 des Balges 10, wobei die außen auf dem Dachbereich des Balges 10 aufsitzende Abdeckung das Bezugszeichen 20 trägt. Der Balg 10 weist den wellenförmig verlaufenden Balgstoff 14 auf, wobei der Balgstoff durch die Balgrahmen 16 im Wellengrund erfasst ist. Parallel zu dem Balgstoff 14 verlaufend befindet sich eine sich von einem Ende des Balges zu dem anderen Ende des Balges erstreckende Bahn 22 aus Balgstoff der Abdeckung 20, die im Bereich der Balgrahmen 16 durch jeweils einen Halterahmen 24 mit dem jeweiligen Balgrahmen 16 verbunden ist. Der Halterahmen 24 ist im Querschnitt etwa U-förmig gebogen und bildet zur Aufnahme des Balgrahmens 16 die Kavität 25. Auf der Innenseite der Kavität 25 ist durch eine Klebung 28 die Bahn 22 aus Balgstoff der Abdeckung 20 an dem Halterahmen 24 fixiert. Die Fixierung der Bahn 22 an dem Halterahmen 24 im Wege der Klebung 28 dient ausschließlich dazu, den Balgstoff während der Montage bzw. während des Transports an Ort und Stelle zu halten. Im Bereich der Kavität 25 und hier insbesondere im Bereich der Schenkel des im Querschnitt U-förmig ausgebildeten Halterahmens 24 ist eine Verzahnung 27 vorgesehen, um die Bahn 22 aus Balgstoff sicher zu fixieren.

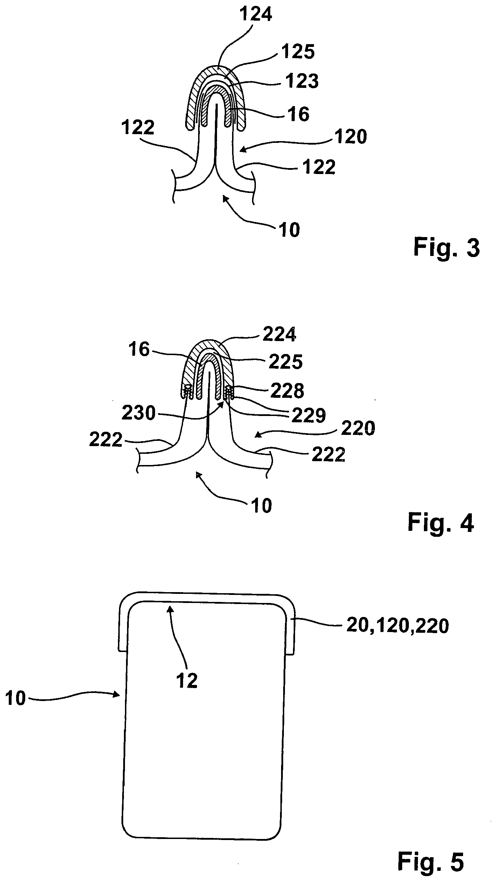

Fig. 3 zeigt eine zweite Variante einer Abdeckung, die mit 120 bezeichnet ist. Die Abdeckung 120 umfasst einzelne aus Balgstoff hergestellte Streifen 122, die zu beiden Seiten des Balgrahmens 16 am Balgrahmen 16 anliegen. Zur Fixierung der Streifen 122 an dem Balgrahmen 16 dient die Spange 123, die federnd ausgebildet ist. Die Spange 123 kann auf ihrer dem Streifen 122 zugewandten Seite ebenfalls eine Verzahnung aufweisen, um die Streifen 122 sicher in ihrer Position zu halten. Der Halterahmen 124 ist im Querschnitt ebenfalls U-förmig ausgebildet, und weist die Kavität 125 auf. Nachdem durch die federnde Spange 123 oder durch eine Mehrzahl derartiger Spangen die Stoffstreifen zu jeder Seite des Balgrahmens 16 fixiert worden sind, wird der Halterahmen 124 über die auf dem Balgrahmen aufsitzenden Spangen 123 bis in den Bereich der seitlichen Flanken der Stoffstreifen 122 gestülpt, um dann mittels einer entsprechend ausgebildeten Gripzange den Bereich der Schenkel des Halterahmens diesen auf den Balgrahmen 16 zu pressen.

Die Ausführungsform gemäß Fig. 4 unterscheidet sich von der gemäß Fig. 3 dadurch, dass die Streifen 222 aus Balgstoff der Abdeckung 220 in jeweils einer in dem Halterahmen 224 angeordneten Nut 228 einsitzen, wobei durch die Nutschenkel 229, die insbesondere mit einer aufeinander zuweisenden Verzahnung 230 versehen sind, die Streifen 222 aus Balgstoff fixiert sind. Nachdem die Halterahmen 224 mit der Kavität 225 über die entsprechenden Balgrahmen 16 gestülpt sind, werden auch hier mithilfe einer entsprechend ausgebildeten Gripzange die Halterahmen auf die entsprechenden Balgrahmen aufgepresst. Auch bei der Variante gemäß Fig. 4 kann die Abdeckung als Haube vorkonfektioniert werden, um an Ort und Stelle über den schadhaften Dachbereich des Balges übergestülpt werden.

Aus Fig. 5 ergibt sich in diesem Zusammenhang ein Schnitt gemäß der Linie V-V aus Fig. 1, wobei dort die jeweilige Abdeckung 20, 120, 220 auf dem Dachbereich 12 des Balges 10 erkennbar ist.

### Bezugszeichenliste:

- 1: Fahrzeug(-teil)
- 2: Fahrzeug(-teil)
- 4: Übergangseinrichtung
- 10: Balg
- 12: Dachbereich
- 14: Balgstoff des Balges
- 16: Balgrahmen des Balges
- 20: Abdeckung
- 22: Bahn aus Balgstoff
- 24: Halterahmen
- 25: Kavität
- 27: Verzahnung
- 28: Klebung

- 120: Abdeckung
- 122: Streifen aus Balgstoff
- 123: Spange
- 124: Halterahmen
- 125: Kavität

- 220: Abdeckung
- 222: Streifen aus Balgstoff
- 224: Halterahmen
- 225: Kavität
- 228: Nut
- 229: Schenkel der Nut
- 230: Verzahnung der Nutschenkel

## Patentansprüche

1. Balg (10) einer Übergangseinrichtung (4) zwischen zwei gelenkig miteinander verbundener Fahrzeuge oder Fahrzeugteile (1, 2) umfassend mindestens einen einen Übergang überspannenden Balg (10), wobei der Balg (10) eine Mehrzahl von Balgrahmen (16) aufweist, wobei auf der Außenseite des Balges (10) im Dachbereich (12) des Balges (10) auf dem Balg (10) eine Abdeckung (20) mit einem Balgstoff angeordnet ist, wobei die Abdeckung mit einer Mehrzahl der Balgrahmen (16) verbunden ist, **dadurch gekennzeichnet, dass** die Abdeckung (20)als Haube ausgebildet ist, wobei sich die Haube bis in den Bereich der Seitenwände des Balges (10) und sich vom Wagenkasten des einen Fahrzeugs oder Fahrzeugteils bis zum Wagenkasten des anderen Fahrzeugs oder Fahrzeugteil erstreckt, wobei die Haube (20) eine Mehrzahl von etwa U-förmig verlaufenden Halterahmen (24) umfasst, wobei die Halterahmen eine Bahn (22) aus Balgstoff aufnehmen, dass der Halterahmen (24) unter Bildung einer Kavität (25) im Querschnitt in etwa U-förmig ausgebildet ist, wobei durch die Kavität (25) der Balgrahmen (16) des Balges (10) aufnehmbar ist.

2. Balg (10) nach Anspruch 1, **dadurch gekennzeichnet, dass** die Bahn (22) aus Balgstoff der Grundkontur des Balges (10) folgend entsprechend auf dem Balg (10) wellen- oder faltenförmig aufliegt.

3. Balg (10) nach nach einem der voranstehenden Ansprüche, **dadurch gekennzeichnet, dass** der Halterahmen (24) Mittel zur Fixierung der Bahn (22) aus Balgstoff am Halterahmen (24) aufweist.

4. Balg (10) nach Anspruch 3, **dadurch gekennzeichnet, dass** die Bahn (22) aus Balgstoff auf der Innenseite der Kavität (25) des Halterahmens (24) angeklebt oder angenietet ist.

5. Balg (10) einer Übergangseinrichtung (4) zwischen zwei gelenkig miteinander verbundener Fahrzeuge oder Fahrzeugteile (1, 2), umfassend mindestens einen einen Übergang überspannenden Balg (10), wobei der Balg eine Mehrzahl von Balgrahmen (16) aufweist, wobei auf der Außenseite des Balges (10) im Dachbereich (12) des Balges (10) auf dem Balg eine Abdeckung (120) mit einem Balgstoff angeordnet ist, wobei die Abdeckung mit einer Mehrzahl der Balgrahmen (16) verbunden ist, und wobei die Abdeckung (120) mehrere Streifen (122) aus Balgstoff umfasst, **dadurch gekennzeichnet, dass** die Streifen (122) aus Balgstoff parallel zu den Falten oder Wellen des Balges im Dachbereich verlaufen, wobei die Streifen aus Balgstoff zu beiden Längsseiten an den Balgrahmen (16) des Balges (10) anliegen und durch mindestens eine Spange (123) fixiert sind, wobei auf den Balgrahmen (16) ein Halterahmen (124) aufgesetzt wird, wobei der Halterahmen (124) zur Bildung einer Kavität (125) zur Aufnahme des Balgrahmens (16) im Querschnitt in etwa U-förmig ausgebildet ist.

6. Balg (10) nach Anspruch 5, **dadurch gekennzeichnet, dass** die Spange (123) federnd ausgebildet ist.

7. Balg (10) einer Übergangseinrichtung (4) zwischen zwei gelenkig miteinander verbundener Fahrzeuge oder Fahrzeugteile (1, 2), umfassend mindestens einen einen Übergang überspannenden Balg (10), wobei der Balg eine Mehrzahl von Balgrahmen (16) aufweist, wobei auf der Außenseite des Balges (10) im Dachbereich (12) des Balges (10) auf dem Balg eine Abdeckung (220) mit einem Balgstoff angeordnet ist, wobei die Abdeckung (220) mit einer Mehrzahl der Balgrahmen (16) verbunden ist, **dadurch gekennzeichnet, dass** die Abdeckung (220) als Haube ausgebildet ist, wobei sich die Haube bis in den Bereich der Seitenwände des Balges (10), und sich vom Wagenkasten des einen Fahrzeugs oder Fahrzeugteils bis zum Wagenkasten des anderen Fahrzeugs oder Fahrzeugteils erstreckt, wobei die als Haube ausgebildete Abdeckung (220) mehrere Streifen (222) aus Balgstoff umfasst, wobei die Streifen (222) zu beiden Längsseiten jeweils durch einen Halterahmen (224) aufgenommen sind, wobei der Halterahmen (224) zur Bildung einer Kavität (225) zur Aufnahme durch den Balgrahmen (16) im Querschnitt etwa U-förmig ausgebildet ist.

8. Balg (10) nach Anspruch 7, **dadurch gekennzeichnet, dass** der im Querschnitt U-förmige Halterahmen (224) im Bereich seiner Schenkel (229) Klemmmittel zur Fixierung des Streifen (222) aus Balgstoff aufweist.

9. Balg (10) nach Anspruch 8, **dadurch gekennzeichnet, dass** zur Bildung der Klemmmittel die Schenkel (229) des Halterahmens (224) eine Nut (228) zur klemmbaren Aufnahme des Streifens (222) aufweisen.

10. Balg (10) nach Anspruch 9, **dadurch gekennzeichnet, dass** in der Nut (228) eine Verzahnung (230) angeordnet ist.

11. Balg (10) nach einem der Ansprüche 1 bis 10,
**dadurch gekennzeichnet,**
**dass** der Halterahmen (24, 124, 224) durch die Kavität (25, 125, 225) auf den Balgrahmen (16) aufclipsbar ist.

12. Balg (10) nach einem der voranstehenden Ansprüche 1 bis 10,
**dadurch gekennzeichnet,**
**dass** der Halterahmen (24, 124, 224) durch die Kavität (25, 125, 225) auf den Balgrahmen (16) aufgepresst ist.

## Claims

1. A bellows (10) of a gangway system (4) between two articulately connected vehicles or vehicle parts (1, 2) including at least one bellows (10) spanning a gangway, wherein the bellows (10) comprises a plurality of bellows frames (16), wherein a cover (20) with a bellows fabric is disposed on the bellows (10), on the outside of the bellows (10), in the region of the roof (12) of the bellows (10), wherein the cover is connected with a plurality of the bellows frames (16),
**characterized in that**
the cover (20) is configured as a hood, wherein the hood extends into the area of the lateral walls of the bellows (10) and from the vehicle body of the one vehicle or vehicle part to the vehicle body of the other vehicle or vehicle part, wherein the hood (20) includes a plurality of approximately U-shaped retaining frames (24), wherein the retaining frames accommodate a panel (22) of bellows fabric, that the retaining frame (24) is configured with an approximately U-shaped cross-section, while forming a cavity (25), wherein the bellows frame (16) of the bellows (10) can be accommodated in the cavity (25).

2. The bellows (10) according to claim 1,
**characterized in that**
the panel (22) of bellows fabric rests on the bellows (10) in a respectively corrugated or folded shape in accordance with the basic contour of the bellows (10).

3. The bellows (10) according to one of the afore-mentioned claims, **characterized in that**
the retaining frame (24) comprises means for fixing the panel (22) of bellows fabric to the retaining frame (24).

4. The bellows (10) according to claim 3,
**characterized in that**
the panel (22) of bellows fabric is glued or riveted on the inside of the cavity (25) of the retaining frame (24).

5. A bellows (10) of a gangway system (4) between to articulately connected vehicles or vehicle parts (1, 2), including at least one bellows (10) spanning a gangway, wherein the bellows comprises a plurality of bellows frames (16), wherein a cover (120) with a bellows fabric is disposed, on the outside of the bellows (10), in the region of the roof (12) of the bellows (10), wherein the cover is connected with a plurality of the bellows frames (16), and wherein the cover (120) includes several strips (122) of bellows fabric,
**characterized in that**
the strips (122) of bellows fabric extend in parallel with the folds or corrugations of the bellows in the area of the roof, wherein the strips of bellows fabric rest on the bellows frames (16) of the bellows (10) on both longitudinal sides and are fixed by at least one brace (123), wherein a retaining frame (124) is fitted onto the bellows frame (16), wherein, in order to form a cavity (125) for accommodating the bellows frame (16), the retaining frame (124) has an approximately U-shaped cross-section.

6. The bellows (10) according to claim 5,
**characterized in that**
the brace (123) is designed to be resilient.

7. A bellows (10) of a gangway system (4) between to articulately connected vehicles or vehicle parts (1, 2), including at least one bellows (10) spanning a gangway, wherein the bellows comprises a plurality of bellows frames (16), wherein a cover (220) with a bellows fabric is disposed on the bellows (10), on the outside of the bellows (10), in the region of the roof (12) of the bellows (10), wherein the cover (220) is connected with a plurality of the bellows frames (16), **characterized in that**
the cover (220) is configured as a hood, wherein the hood extends into the area of the lateral walls of the bellows (10) and from the vehicle body of the one vehicle or vehicle part to the vehicle body of the other vehicle or vehicle part, wherein the cover (220) configured as a hood includes several strips (222) of bellows fabric, wherein the strips (222) of bellows fabric are received on both longitudinal sides respectively by a retaining frame (224), wherein in order to form a cavity (225) for accommodating the bellows frame (16), the retaining frame (224) has an approximately U-shaped cross-section.

8. The bellows (10) according to claim 7,
**characterized in that**
the retaining frame (224) with a U-shaped cross-section comprises clamping means in the area of its limbs (229) for fixing the strips (222) of bellows fabric.

9. The bellows (10) according to claim 8,
**characterized in that**
for forming the clamping means, the limbs (229) of the retaining frame (224) comprise a groove (228) for clampably receiving the strips (222).

10. The bellows (10) according to claim 9,
**characterized in that**
a serration (230) is disposed in the groove (228).

11. The bellows (10) according to one of the claims 1 to 10,
**characterized in that**
the retaining frame (24, 124, 224) can be clipped onto the bellows frame (16) by way of the cavity (25, 125, 225).

12. The bellows (10) according to one of the afore-mentioned claims 1 to 10,
**characterized in that**
the retaining frame (24, 124, 224) is pressed onto the bellows frame (16) by the cavity (25, 125, 225).

## Revendications

1. Soufflet (10) d'un dispositif d'intercommunication (4) entre deux véhicules ou parties de véhicules (1, 2) reliés l'un à l'autre de manière articulée, comprenant au moins un soufflet (10) enjambant une passerelle, où le soufflet (10) comporte une pluralité de cadres de soufflet (16), où une couverture (20) avec un tissu de soufflet est disposée sur le soufflet (10), sur le côté extérieur du soufflet (10), dans la région du toit (12) du soufflet (10), où la couverture est attachée à une pluralité des cadres de soufflet (16),
**caractérisé en ce que**
la couverture (20) prend la forme d'un capot, où le capot s'étend jusque dans la région des parois latérales du soufflet (10) et du châssis de l'un des véhicules ou parties de véhicule au châssis de l'autre véhicule ou partie de véhicule, où le capot (20) comprend une pluralité de cadres de support (24) s'étendant approximativement en forme de U, où les cadres de support reçoivent un panneau (22) de tissu de soufflet, que le cadre de support (24) présente une section transversale approximativement en forme de U et forme une cavité (25), le cadre de soufflet (16) du soufflet (10) pouvant être reçu par la cavité (25).

2. Soufflet (10) selon la revendication 1,
**caractérisé en ce que**
en fonction du contour de base du soufflet (10), le panneau (22) en tissu de soufflet repose sur le soufflet (10) respectivement sous forme d'ondulation ou sous forme de plis (10).

3. Soufflet (10) selon l'une des revendications précédentes,
**caractérisé en ce que**
le cadre de support (24) comporte des moyens de fixation du panneau (22) en tissu de soufflet au cadre de support (24).

4. Soufflet (10) selon la revendication 3,
**caractérisé en ce que**
le panneau (22) en tissu de soufflet est collé ou riveté sur le côté intérieur de la cavité (25) du cadre de support (24).

5. Soufflet (10) d'un dispositif d'intercommunication (4) entre deux véhicules ou parties de véhicules (1, 2) reliés l'un à l'autre de manière articulée, comprenant au moins un soufflet (10) enjambant une passerelle, où le soufflet comporte une pluralité de cadres de soufflet (16), où une couverture (120) avec un tissu de soufflet est disposée sur le soufflet (10), sur le côté extérieur du soufflet (10), dans la région du toit (12) du soufflet (10), où la couverture est attachée à une pluralité des cadres de soufflet (16), et où la couverture (120) comprend plusieurs bandes (122) en tissu de soufflet,
**caractérisé en ce que**
les bandes (122) en tissu de soufflet s'étendent parallèlement aux plis ou ondulations du soufflet dans la région du toit, où les bandes en tissu de soufflet reposent, sur les deux côtés longitudinaux, sur le cadre de soufflet (16) du soufflet (10) et sont fixées par au moins une agrafe (123), où un cadre de support (124) est placé sur le cadre de soufflet (16), où pour former une cavité (125) pour recevoir le cadre de soufflet (16), le cadre de support (124) présente une section transversale approximativement en forme de U.

6. Soufflet (10) selon la revendication 5,
**caractérisé en ce que**
l'agrafe (123) est réalisée de manière élastique.

7. Soufflet (10) d'un dispositif d'intercommunication (4) entre deux véhicules ou parties de véhicules (1, 2) reliés l'un à l'autre de manière articulée, comprenant au moins un soufflet (10) enjambant une passerelle, où le soufflet comporte une pluralité de cadres de soufflet (16), où une couverture (220) avec un tissu de soufflet est disposée sur le soufflet (10), sur le côté extérieur du soufflet (10), dans la région du toit (12) du soufflet (10), où la couverture (220) est attachée à une pluralité des cadres de soufflet (16),
**caractérisé en ce que**
la couverture (220) prend la forme d'un capot, où le capot s'étend jusque dans la région des parois latérales du soufflet (10) et du châssis de l'un des véhicules ou parties de véhicule au châssis de l'autre véhicule ou partie de véhicule, où la couverture (220) en forme de capot comprend plusieurs bandes (222) en tissu de soufflet, où les bandes (222) sont reçues, sur les deux côtés longitudinaux, respectivement par un cadre de support (224), où pour former une cavité (225) pour recevoir le cadre de soufflet (16), le cadre de support (224) présente une section transversale approximativement en forme de U.

8. Soufflet (10) selon la revendication 7,
**caractérisé en ce que**
le cadre de support (224) ayant une section transversale en forme de U comporte, dans la région de ses montants (229), des moyens de serrage pour fixer la bande (222) en tissu de soufflet.

9. Soufflet (10) selon la revendication 8,
**caractérisé en ce que**
pour former les moyens de serrage, les montants (229) du cadre de support (224) comportent une rainure (228) pour recevoir la bande (222) par serrage.

10. Soufflet (10) selon la revendication 9,
**caractérisé en ce que**
une denture (230) est disposée dans la rainure (228).

11. Soufflet (10) selon l'une des revendications 1 à 10,
**caractérisé en ce que**
le cadre de support (24, 124, 224) peut être clipsé sur le cadre de soufflet (16) par l'intermédiaire de la cavité (25, 125, 225).

12. Soufflet (10) selon l'une des revendications précédentes 1 à 10,
**caractérisé en ce que**
le cadre de support (24, 124, 224) est pressé sur le cadre de soufflet (16) par l'intermédiaire de la cavité (25, 125, 225).
